# EUROPÄISCHE PATENTSCHRIFT

(11) **EP 3 943 973 B1**
(45) Veröffentlichungstag und Bekanntmachung des Hinweises auf die Patenterteilung: **22.06.2022**
(21) Anmeldenummer: 21182130.1
(22) Anmeldetag: 28.06.2021
(51) Int. Cl.: G01S 7/481, G01S 17/42

(54) **LASERSCANNER**
LASER SCANNER
BALAYEUR LASER

(30) Priorität: 23.07.2020 DE 102020119490
(43) Veröffentlichungstag der Anmeldung: 26.01.2022
(73) Patentinhaber: SICK AG, 79183 Waldkirch (DE)
(72) Erfinder: Baumgartner, August, 79280 Au (DE); Nübling, Ralf Ulrich, 79211 Denzlingen (DE)

(56) Entgegenhaltungen:
- EP-A1- 2 237 065
- US-B1- 10 612 587

## Beschreibung

Die vorliegende Erfindung betrifft einen Laserscanner zur Erfassung von Objekten in einem Überwachungsbereich nach dem Oberbegriff von Anspruch 1.

Laserscanner arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Um den Messbereich des Laserscanners zu erweitern, wird der Abtaststrahl bewegt. Beim Laserscanner überstreicht ein von einem Laser erzeugter Lichtstrahl mit Hilfe eines Drehspiegels periodisch den Überwachungsbereich. Zusätzlich zu der gemessenen Abstandsinformation wird aus der Winkelstellung der Ablenkeinheit auf die Winkellage des Objektes geschlossen und damit ist der Ort eines Objektes in dem Überwachungsbereich in zweidimensionalen Polarkoordinaten erfasst.

Die DE 20 2018 103 258 U1 offenbart einen derartigen Laserscanner.

Durch den technischen Wandel werden Laserscanner immer häufiger in neuen Anwendungen eingesetzt. Viele dieser Anwendungen sind mobile Anwendungen, bei denen der Laserscanner auf eine fahrende Einheit, beispielsweise einem fahrerlosen Transportfahrzeug (Automated Guided Vehicle, kurz: AGV, Automated Guided Carts, kurz: AGC), einem Gabelstapler, einem Putzroboter, einer Walze, einem Bagger oder ähnlichem montiert ist.

Die Einsatzumgebung kann unter Umständen sehr rau sein, beispielsweise auf einer Baustelle, so dass die Anforderungen an die mechanische Robustheit eines Scanners steigen, denn der Laserscanner soll auch in diesem Umfeld die Anforderungen bezüglich Einsatzfähigkeit und Lebensdauer bestehen.

Bisher wird die drehende Abtasteinheit wie folgt aufgebaut:
1. Die Abtasteinheit wird oberhalb einer Motorlagerung aufgebaut.
   Eine große Masse der rotierenden Abtasteinheit liegt oberhalb bzw. seitlich der Motorlagerung. Bei Schock und/oder Vibrationsbelastungen erfährt die Drehachse bzw. Drehwelle ein hohes Biegemoment und eine dementsprechend starke Auslenkung kann im schlimmsten Fall zu einem Biegeversagen der Drehwelle bzw. Drehachse führen.
   Weiterhin kann aber auch der Messkopf bei starker Auslenkung an einer Frontscheibe des Laserscanners schleifen, was ebenfalls zu einem beschädigten oder defekten Sensor führt, da die Transmission der Frontscheibe durch ein Verkratzen eingeschränkt wird. Verhindern ließe sich das durch einen ausreichend großen Abstand des Messkopfes zur Frontscheibe. Dadurch leidet aber die Leistungsfähigkeit des Laserscanners, da der Bauraum nicht optimal ausgeschöpft werden kann und es durch eine fehlende Kanaltrennung in diesem Bereich zu optischem Übersprechen führen kann.
2. Der Motor befindet sich in der Mitte der drehenden Abtasteinheit.
   Durch die Mittenlage des Motors können entweder nur kleine Abtasteinheiten mit geringer optischer Leistung eingebaut werden, oder die Drehachse muss über optische Bauelemente umgangen werden, wie z. B. Spiegel. Dies ist aufwändig und teuer, da zusätzliche optische Teile benötigt werden. Zudem müssen diese zusätzlich justiert oder exakt platziert werden. Der Einsatz weiterer Teile im optischen Pfad macht das System ebenfalls anfälliger gegenüber äußeren und inneren Einflüssen wie z. B. Schock und Vibrationseinflüssen, Fremdlicht, optisches Übersprechen usw.
3. Eine weitere Möglichkeit ist, die Drehachse an den jeweiligen Enden zu lagern.

Der Einsatz eines weiteren Lagers zusätzlich zu den Motorlagern würde eine sehr genaue Montage und Justage des Lagers notwendig machen. Dieser Aufbau wäre durch das zusätzliche Lager überbestimmt. Um das zusätzliche Lager auszurichten, müsste eine Stützwelle exakt zentrisch über der Motorwelle liegen und dürfte gegenüber dieser ebenfalls nicht verkippt sein, um eine Verspannung der Lager bzw. des Motors zu vermeiden. Eine zu große Verspannung im System führt zu einer geringeren Lebensdauer und zu einer erhöhten Leistungsaufnahme oder Temperatur im Laserscannergehäuse.

Die EP 2 237 065 A1 offenbart einen optischen Sensor nach dem Laufzeitprinzip mit einer Lichtquelle zum Aussenden von Sendelichtpulsen in einen Überwachungsbereich, mit einer Dreheinrichtung zum Drehen einer Strahlrichtung der Sendelichtpulse um eine quer zur Strahlrichtung orientierte Rotationsachse, mit einem Detektor zum Nachweisen von Lichtpulsen, die von Objekten im Überwachungsbereich zurückgestrahlt werden, mit einem Gehäuse zum Trennen eines Sensorinnenraums von der Umgebung mit einer Trennscheibe, die für die Sendelichtpulse und die zurückgestrahlten Lichtpulse durchlässig ist, mit einer Testeinrichtung zum Prüfen einer optischen Durchlässigkeit der Trennscheibe und mit einer Steuer- und Auswerteeinheit zum Ansteuern der Lichtquelle, zum Auswerten der von dem Detektor nachgewiesenen Lichtpulse und zum Bestimmen eines Objektabstands auf Grundlage einer gemessenen Laufzeit von Lichtpulsen, wobei die Steuer- und Auswerteeinheit mit der Testeinrichtung zusammenwirkt, wobei im Sensorinnenraum als Teil der Testeinrichtung mindestens ein Testdetektor vorhanden ist, der auf einem um die Rotationsachse drehbaren Rotor angeordnet ist, dass der Testdetektor auf Durchtrittsbereiche der Trennscheibe ausgerichtet ist, durch welche die Sendelichtpulse und/oder die zurückgestrahlten Lichtpulse hindurchtreten, dass zum Bereitstellen des Testlichts als weiterer Teil der Testeinrichtung eine Testlichtquelle vorhanden ist, die ebenfalls auf dem Rotor angeordnet ist, dass außerhalb des Gehäuses mindestens ein Reflektorelement angeordnet ist, auf welches das Testlicht ausgerichtet ist, und dass der Testdetektor zum Nachweisen von von dem Reflektorelement zurückgestrahltem Testlicht positioniert ist.

Die US 10 612 587 B1 offenbart optische Systeme und zugehörige Vorrichtungen, insbesondere solche, die sich auf Lichterkennungs- und Entfernungsmesssysteme (LI-DAR) beziehen. Ein beispielhaftes optisches System umfasst ein Gehäuse, eine Welle, die eine Drehachse definiert, und eine drehbare optische Komponente, die mit der Welle gekoppelt ist. Das optische System umfasst auch ein erstes Drehlager mit einem Innenring, einem Außenring und mehreren Rollelementen, die konfiguriert sind, um zwischen dem Innenring und dem Außenring zu rollen. Der Innenring ist mit der Welle gekoppelt und der Außenring ist mit dem Gehäuse gekoppelt. Das optische System umfasst auch einen Vorspannungsmechanismus mit einer Feder, die mit dem Gehäuse gekoppelt ist, und einem Vorspannungsverteiler, der mit der Feder und dem Außenring gekoppelt ist. Die Feder ist so konfiguriert, dass sie durch den Vorspannungsverteiler eine axiale Vorspannungskraft auf den Außenring ausübt.

Eine Aufgabe der Erfindung besteht darin, einen Laserscanner bereitzustellen, der auch starken Schwing- und Schockbelastungen standhält, im Betrieb bzw. im Funktionsbetrieb aber den Vorteil eines möglichst variablen Bauraums mit geringer elektronischer Leistungsaufnahme vereint. Auch soll der Laserscanner keine erhöhten Anforderungen an die Kosten und die Herstellung stellen.

Die Aufgabe wird gemäß Anspruch 1 gelöst durch einen Laserscanner zur Erfassung von Objekten in einem Überwachungsbereich, mit einer, um eine Drehachse drehbare Abtasteinheit mit mindestens einem Abtastmodul zur Abtastung des Überwachungsbereichs im Verlauf der Drehung der Abtasteinheit um die Drehachse und zum Erzeugen von entsprechenden Empfangssignalen sowie einer Auswerteeinheit zur Gewinnung von Informationen über die Objekte aus den Empfangssignalen, wobei das Abtastmodul mindestens einen Lichtsender zum Aussenden eines Lichtstrahls oder mehrerer voneinander separierten Lichtstrahlen und mindestens einen Lichtempfänger zum Erzeugen der Empfangssignale aus den von Objekten remittierten Lichtstrahlen umfasst, wobei eine Drehwelle mit einem Motor verbunden ist und die Drehwelle in dem Motor oder an dem Motor in einem ersten Lager gelagert ist, wobei zu der Drehwelle an dem zum Motor gegenüberliegenden Ende der Abtasteinheit eine Stützwelle und ein Stützlager angeordnet ist, wobei das Stützlager eine radiale Bewegung der Stützwelle in einem ersten radialen Bereich erlaubt und eine radiale Bewegung der Stützwelle in einem zweiten radialen Bereich, der an den ersten radialen Bereich angrenzt, begrenzt.

Die drehbare Abtasteinheit bzw. ein Messkopf ist einseitig bzw. oberhalb des Motors angeordnet und lässt dadurch den größtmöglichen Bauraum für die Ausgestaltung des optischen Systems des Laserscanners zu. An dem zum Motor gegenüberliegenden Ende ist zentrisch zu der Drehachse, Drehwelle bzw. Motorwelle eine weitere Stützwelle bzw. Stützachse angeordnet. Die Stützwelle kann beispielsweise in ein die Abtasteinheit umschließendes Bauteil integriert sein. Das Stützlager umgibt die Stützwelle radial. Das Stützlager kann im Gerätedeckel des Laserscanners angeordnet sein.

An die Montage des Laserscanners werden somit keine höheren Anforderungen gestellt, da die Stützwelle im Stützlager umlaufend Spiel hat, so dass die Abtasteinheit bzw. der Messkopf im Betrieb bzw. Normalbetrieb im Stützlager frei läuft. Der Spalt bzw. der erste radiale Bereich ist dabei so groß, dass eine Kollision zwischen Abtasteinheit und Frontscheibe verhindert ist und eine Überbelastung der Drehwelle bzw. Motorwelle ausgeschlossen ist. In Richtung der Drehachse kann sich die Stützwelle innerhalb der vorgegebenen konstruktiven Grenzen bzw. Toleranzgrenzen frei bewegen.

Im Falle eines Schockereignisses in Querrichtung bzw. radial zur Drehachse bzw. Rotationsachse wird die Abtasteinheit ausgelenkt und die Stützwelle kommt mit dem Stützlager in Berührung. Der Kontakt der Stützwelle mit dem Stützlager puffert die Energie des Schocks ab. Durch das Stützlager wird ein Abbremsen des Motors reduziert oder sogar verhindert. Sobald die ausgelenkte Abtasteinheit wieder zurückschwingt, dreht die Stützwelle wieder frei und das Stützlager ist nicht mehr im Eingriff.

Gemäß der Erfindung liegt keine mechanische Überbestimmung des Systems vor. Dadurch entsteht weniger Reibung und damit weniger mechanischer Verschleiß der beweglichen Teile des Laserscanners. Dadurch wird die Lebensdauer des Laserscanners erhöht.

Weiter erfolgt eine geringere elektrische Leistungsaufnahme des Laserscanners, da das Stützlager nicht dauerhaft im Einsatz ist.

Weiter liegt gemäß der Erfindung ein geringeres Bremsmoment der Stützwelle vor, durch den Einsatz des Stützlagers.

Weiter erfolgt eine einfachere Fertigung des Laserscanners, da der Spalt bzw. der erste radiale Bereich zwischen Stützlager und Stützwelle so ausgelegt ist, dass keine zusätzliche Justage oder eine Präzisionsjustage notwendig ist.

Weiter kann ein modularer Laserscanner gebildet werden, da unterschiedliche Abtasteinheiten bzw. Messköpfe mit einem Motor bzw. einer Motoreinheit kombiniert werden können, da der Bauraum neben bzw. oberhalb des Motors frei gestaltbar ist.

In Weiterbildung der Erfindung weist das Stützlager mindestens einen Anschlagkörper auf bzw. ist das Stützlager mindestens ein Anschlagkörper. Der Anschlagkörper kann auch eine Anschlagbuchse sein. Der Anschlagkörper ist dafür ausgebildet, eine Berührung bzw. einen Anschlag oder Stoß der Drehwelle aufzunehmen. Hierzu ist der Anschlagkörper aus geeignetem Material, beispielsweise Stahl, oder Edelstahl ausgebildet. Jedoch können auch Kunststoffe für das Stützlager bzw. den Anschlagkörper vorgesehen sein.

In Weiterbildung der Erfindung weist das Stützlager mindestens ein Kugellager auf bzw. ist das Stützlager mindestens ein Kugellager. Durch das Kugellager weist das Stützlager eine besonders geringe Reibung auf. Kugellager sind aufgrund hoher Stückzahlen als Katalogware sehr preiswert. Zwar können auch Rollenlager gemäß vorliegender Erfindung als Stützlager eingesetzt werden, jedoch sind Kugellager aus Kostengründen vorzuziehen.

In Weiterbildung der Erfindung weist das Stützlager mindestens ein Gleitlager bzw. eine Gleithülse auf, bzw. ist das Stützlager mindestens ein Gleitlager bzw. eine Gleithülse. Gleitlager bzw. Gleithülsen sind noch preiswerter als Kugellager. Zwar ist die verbleibende Reibung bei Gleitlagern höher als bei vergleichbaren Kugellagern, jedoch eignen sich Gleitlager als Stützlager.

In Weiterbildung der Erfindung erlaubt das Stützlager eine axiale Bewegung der Stützwelle in einem ersten axialen Bereich und eine axiale Bewegung der Stützwelle in einem zweiten axialen Bereich, der an den ersten axialen Bereich angrenzt, ist begrenzt.

Neben der radialen Bewegungsbegrenzung ist das Stützlager gemäß dieser Ausführungsform ausgebildet, eine axiale Bewegung der Stützwelle zu begrenzen. Dadurch werden die mechanischen Belastungen in mindestens einer axialen Richtung zur Drehachse reduziert, bei einer Schwing/-Schockbelastung in axialer Richtung.

In Weiterbildung der Erfindung erlaubt das Stützlager eine axiale Bewegung der Stützwelle in einem dritten axialen Bereich und eine axiale Bewegung der Stützwelle in einem vierten axialen Bereich, der an den dritten axialen Bereich angrenzt, ist begrenzt.

Neben der radialen Bewegungsbegrenzung ist das Stützlager gemäß dieser Ausführungsform ausgebildet, eine axiale Bewegung der Stützwelle zu begrenzen. Dadurch werden die mechanischen Belastungen in zwei oder beiden axialen Richtungen zur Drehachse reduziert, bei einer Schwing/-Schockbelastung in axialer Richtung.

In Weiterbildung der Erfindung ist zusätzlich an dem Ende der Stützwelle des Stützlagers ein Spitzlager angeordnet, wobei das Spitzlager eine axiale Bewegung der Stützwelle in einem ersten axialen Bereich erlaubt und eine axiale Bewegung der Stützwelle in einem zweiten axialen Bereich, der an den ersten axialen Bereich angrenzt, begrenzt.

Ein Spitzlager ist ein Gleitlager mit einer Gleitspitze, wodurch eine besonders geringe Restreibung erreicht wird und das Spitzlager gleichzeitig sehr preiswert ist.

In Weiterbildung der Erfindung weist das Stützlager eine Federung in radialer Richtung auf. Damit können Stöße bzw. Belastungen aufgrund von Schwing-/Schockbelastungen weicher abgefangen werden und die mechanische Impulsbelastung auf das Stützlager durch die Stützwelle ist geringer.

Beispielsweise ist das Stützlager durch Federn und ein Kugellager gebildet, welches die Stützwelle umschließt. Das Kugellager selbst ist über radial zur Drehachse angeordnete Federn am Laserscannergehäuse befestigt, wodurch das Stützlager gebildet wird. Damit erlaubt das Stützlager bzw. Kugellager eine radiale Bewegung der Stützwelle in einem ersten radialen Bereich und eine radiale Bewegung der Stützwelle in einem zweiten radialen Bereich, der an den ersten radialen Bereich angrenzt, wird begrenzt. Damit wird die Stützwelle begrenzt und ggf. zusätzlich gefedert.

Durch die Federung kann aber auch gleichzeitig eine axiale Bewegung der Stützwelle gefedert und begrenzt werden.

Die Federung wird vorzugsweise durch Metallfedern gebildet. Jedoch können auch Kunststofffedern eingesetzt werden.

In Weiterbildung der Erfindung ist die Federung durch schräg zum Radius der Drehachse angeordnete Stege gebildet.

Damit können Stöße bzw. Belastungen aufgrund von Schwing-/Schockbelastungen ebenfalls weicher abgefangen werden und die mechanische Impulsbelastung auf das Stützlager ist geringer.

Beispielsweise ist das Stützlager durch mehrere Stege gebildet, welche ein Kugellager umschließen, wodurch das Stützlager gebildet ist. Das Kugellager selbst ist über schräg zum Radius der Drehachse angeordnete Stege an dem Laserscannergehäuse befestigt. Damit erlaubt das Stützlager bzw. Kugellager eine radiale Bewegung der Stützwelle in einem ersten radialen Bereich und eine radiale Bewegung der Stützwelle in einem zweiten radialen Bereich, der an den ersten radialen Bereich angrenzt. Damit wird die Stützwelle begrenzt und ggf. zusätzlich gefedert.

Durch die Federung der Stege kann aber auch gleichzeitig eine axiale Bewegung der Stützwelle gefedert und begrenzt werden.

Die Stege sind vorzugsweise aus Kunststoff gebildet. Jedoch können die Stege auch aus Federmetall ausgebildet sein.

Je nach Material und Form der Stege kann eine progressive Dämpfungskennlinie eingestellt werden.

In Weiterbildung der Erfindung weist das Stützlager in radialer Richtung eine Dämpfung auf. Die Dämpfung führt zu einem schnelleren Abklingen der Belastung bzw. der mechanischen Schwingungen bei einer Schwing-/Schockbelastung. Der Dämpfer absorbiert die Belastungsenergie, wodurch das Stützlager entlastet wird. Beispielsweise ist der Dämpfer aus einem kompressiblen Schaumstoff gebildet.

In Weiterbildung der Erfindung ist die Dämpfung von einem Viskose-Schaumstoff gebildet, wobei die Elastizität des Viskose-Schaumstoff abhängig von der Krafteinwirkung ist, wobei die Elastizität nachlässt, je höher die Krafteinwirkung ist. Damit ist die Dämpfung abhängig von der einwirkenden Kraft, wodurch ebenfalls das Stützlager entlastet wird und eine mechanische Belastung auf die Stützwelle verringert wird.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 6: jeweils einen Laserscanner mit einem Stützlager;
- Figur 7: ein Stützlager mit einer Federung;
- Figur 8: ein Stützlager mit einer Dämpfung;
- Figur 9: ein Stützlager mit einer Federung und einer Dämpfung.

In den nachfolgenden Figuren sind identische Teile mit identischen Bezugszeichen versehen.

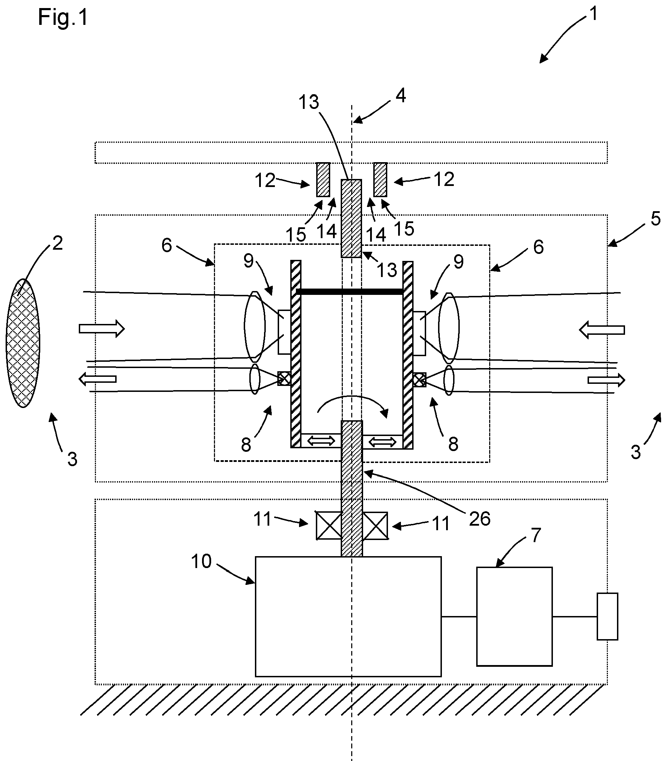

Figur 1 zeigt einen Laserscanner 1 zur Erfassung von Objekten 2 in einem Überwachungsbereich, mit einer, um eine Drehachse 4 drehbare Abtasteinheit 5 mit mindestens einem Abtastmodul 6 zur Abtastung des Überwachungsbereichs 3 im Verlauf der Drehung der Abtasteinheit 5 um die Drehachse 4 und zum Erzeugen von entsprechenden Empfangssignalen sowie einer Auswerteeinheit 7 zur Gewinnung von Informationen über die Objekte 2 aus den Empfangssignalen, wobei das Abtastmodul 6 mindestens einen Lichtsender 8 zum Aussenden eines Lichtstrahls oder mehrerer voneinander separierten Lichtstrahlen und mindestens einem Lichtempfänger 9 zum Erzeugen der Empfangssignale aus den von Objekten 2 remittierten Lichtstrahlen umfasst, wobei eine Drehwelle 26 mit einem Motor 10 verbunden ist und die Drehwelle 26 in dem Motor 10 oder an dem Motor 10 in einem ersten Lager 11 gelagert ist, wobei zu der Drehwelle 26 an dem zum Motor 10 gegenüberliegenden Ende der Abtasteinheit 5 eine Stützwelle 13 und ein Stützlager 12 angeordnet ist, wobei das Stützlager 12 eine radiale Bewegung der Stützwelle 13 in einem ersten radialen Bereich 14 erlaubt und eine radiale Bewegung der Stützwelle 13 in einem zweiten radialen Bereich 15, der an den ersten radialen Bereich 14 angrenzt, begrenzt.

Die drehbare Abtasteinheit 5 bzw. ein Messkopf ist einseitig bzw. oberhalb des Motors 10 angeordnet und lässt dadurch den größtmöglichen Bauraum für die Ausgestaltung des optischen Systems des Laserscanners 1 zu. An dem zum Motor 10 gegenüberliegenden Ende ist zentrisch zu der Drehachse 4, Drehwelle 26 bzw. Motorwelle eine weitere Stützwelle 13 angeordnet. Die Stützwelle 13 kann beispielsweise in ein die Abtasteinheit 5 umschließendes Bauteil integriert sein. Das Stützlager 12 umgibt die Stützwelle 13 radial. Das Stützlager 12 kann im Gerätedeckel angeordnet sein.

Die Stützwelle 13 hat im Stützlager 12 umlaufend Spiel, so dass die Abtasteinheit 7 bzw. der Messkopf im Betrieb bzw. Normalbetrieb im Stützlager 12 frei läuft. Der Spalt bzw. der erste radiale Bereich 14 ist dabei so klein, dass eine Kollision zwischen Abtasteinheit 5 und Frontscheibe verhindert ist und eine Überbelastung der Drehwelle 26 bzw. Motorwelle ausschließt. In Richtung der Drehachse 4 kann sich die Stützwelle 13 innerhalb der vorgegebenen konstruktiven Grenzen bzw. Toleranzgrenzen frei bewegen.

Im Falle eines Schockereignisses in Querrichtung bzw. radial zur Drehachse 4 bzw. Rotationsachse wird die Abtasteinheit 5 ausgelenkt und die Stützwelle 13 kommt mit dem Stützlager 12 in Berührung. Der Kontakt der Stützwelle 13 mit dem Stützlager 12 puffert die Energie des Schocks ab. Durch das Stützlager 12 wird ein Abbremsen des Motors 10 reduziert oder sogar verhindert. Sobald die ausgelenkte Abtasteinheit 5 wieder zurückschwingt, dreht die Stützwelle 13 wieder frei und das Stützlager 12 ist nicht mehr im Eingriff.

Gemäß Figur 1 kann ein modularer Laserscanner 1 gebildet werden, da unterschiedliche Abtasteinheiten 5 bzw. Messköpfe mit einem Motor 10 bzw. einer Motoreinheit kombiniert werden können, da der Bauraum neben bzw. oberhalb des Motors 10 frei gestaltbar ist.

Optional weist das Stützlager 12 mindestens einen Anschlagkörper auf bzw. ist das Stützlager mindestens ein Anschlagkörper. Der Anschlagkörper kann auch eine Anschlagbuchse sein.

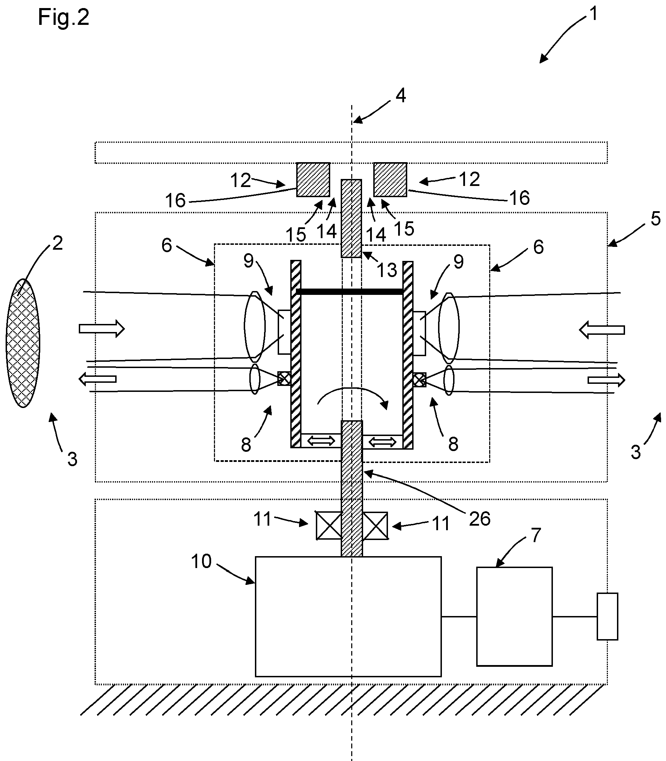

Gemäß Figur 2 ist das Stützlager 12 ein Kugellager 16 bzw. weist das Stützlager 12 mindestens ein Kugellager 16 auf. Durch das Kugellager 16 weist das Stützlager 12 eine besonders geringe Reibung auf. Es können auch Rollenlager gemäß einer nicht dargestellten Ausführungsform eingesetzt werden.

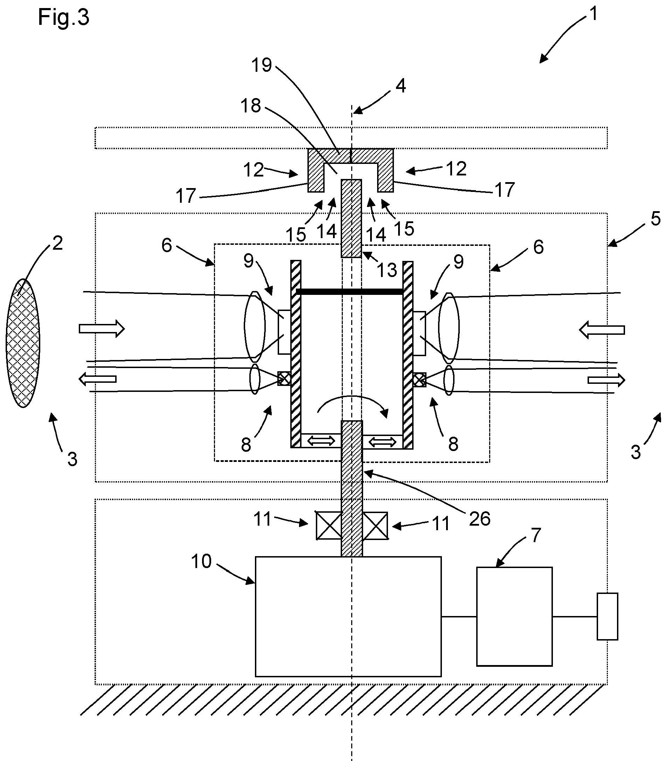

Gemäß Figur 3 ist das Stützlager 12 ein Gleitlager 17 bzw. weist das Stützlager 12 mindestens ein Gleitlager 17 auf. Zwar ist die verbleibende Reibung bei Gleitlagern 17 höher als bei vergleichbaren Kugellagern 16, jedoch eignen sich Gleitlager 17 als Stützlager 12.

Gemäß Figur 3 erlaubt das Stützlager 12 eine axiale Bewegung der Stützwelle 13 in einem ersten axialen Bereich 18 und eine axiale Bewegung der Stützwelle 13 in einem zweiten axialen Bereich 19, der an den ersten axialen Bereich 18 angrenzt, ist begrenzt.

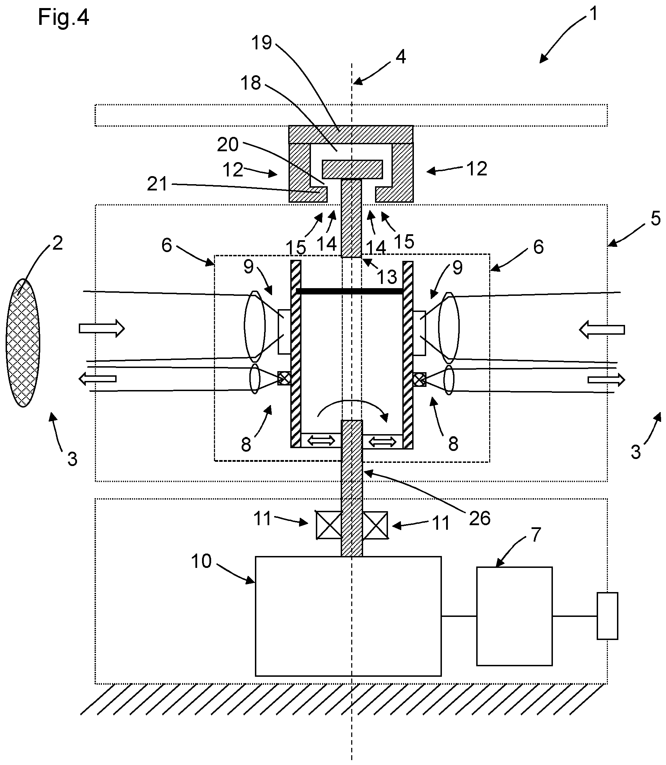

Neben der radialen Bewegungsbegrenzung ist das Stützlager 12 gemäß dieser Ausführungsform ausgebildet, eine axiale Bewegung der Stützwelle 13 zu begrenzen. Dadurch werden die mechanischen Belastungen in mindestens einer axialen Richtung zur Drehachse 4 reduziert, bei einer Schwing/-Schockbelastung in axialer Richtung. Gemäß Figur 4 erlaubt das Stützlager 12 eine axiale Bewegung der Stützwelle 13 in einem dritten axialen Bereich 20 und eine axiale Bewegung der Stützwelle 13 in einem vierten axialen Bereich 21, der an den dritten axialen Bereich 20 angrenzt, ist begrenzt.

Neben der radialen Bewegungsbegrenzung ist das Stützlager 12 gemäß dieser Ausführungsform ausgebildet, eine axiale Bewegung der Stützwelle 13 zu begrenzen. Dadurch werden die mechanischen Belastungen in zwei oder beiden axialen Richtungen zur Drehachse 4 reduziert, bei einer Schwing/-Schockbelastung in axialer Richtung.

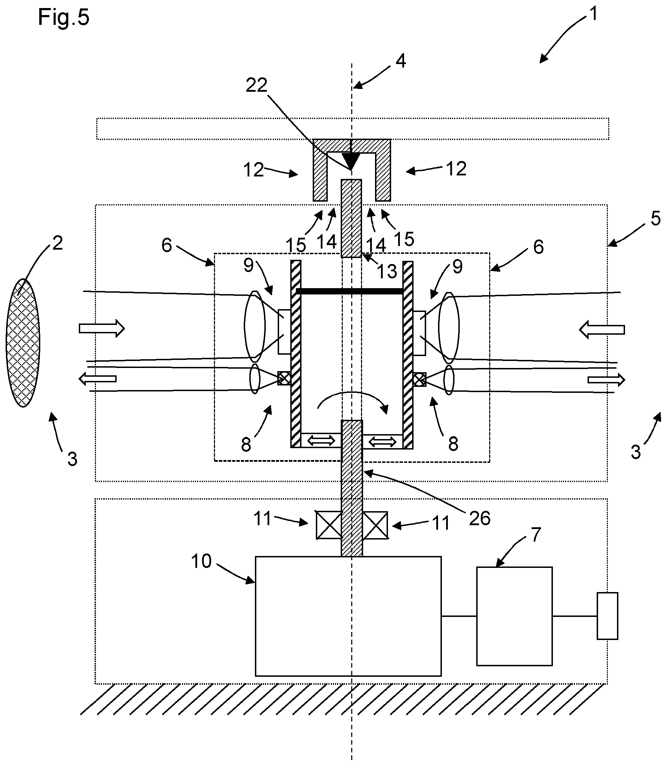

Gemäß Figur 5 ist zusätzlich an dem Ende der Stützwelle 13 des Stützlagers 12 ein Spitzlager 22 angeordnet, wobei das Spitzlager 22 eine axiale Bewegung der Stützwelle 13 in einem ersten axialen Bereich 18 erlaubt und eine axiale Bewegung der Stützwelle 13 in einem zweiten axialen Bereich 19, der an den ersten axialen Bereich 18 angrenzt, begrenzt.

Ein Spitzlager 22 ist ein Gleitlager mit einer Gleitspitze, wodurch eine besonders geringe Restreibung erreicht wird.

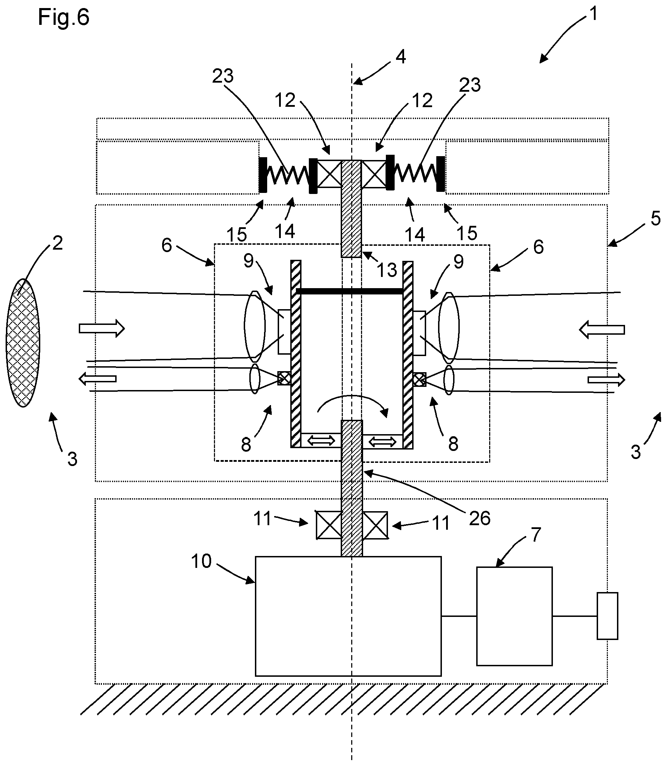

Gemäß Figur 6 weist das Stützlager 12 eine Federung 23 in radialer Richtung auf. Damit können Stöße bzw. Belastungen aufgrund von Schwing-/Schockbelastungen weicher abgefangen werden und die mechanische Impulsbelastung auf das Stützlager 12 ist geringer.

Beispielsweise ist das Stützlager 12 durch Federn und ein Kugellager gebildet, welches die Stützwelle 13 umschließt. Das Kugellager selbst ist über radial zur Drehachse 4 angeordnete Federn am Laserscannergehäuse befestigt, wodurch das Stützlager 12 gebildet wird. Damit erlaubt das Stützlager 12 bzw. Kugellager eine radiale Bewegung der Stützwelle 13 in einem ersten radialen Bereich 14 und eine radiale Bewegung der Stützwelle 13 in einem zweiten radialen Bereich 15, der an den ersten radialen Bereich 14 angrenzt, begrenzt.

Durch die Federung 23 kann aber auch gleichzeitig eine axiale Bewegung der Stützwelle 13 gefedert und begrenzt werden.

Die Federung 23 wird vorzugsweise durch Metallfedern gebildet. Jedoch können auch Kunststofffedern eingesetzt werden.

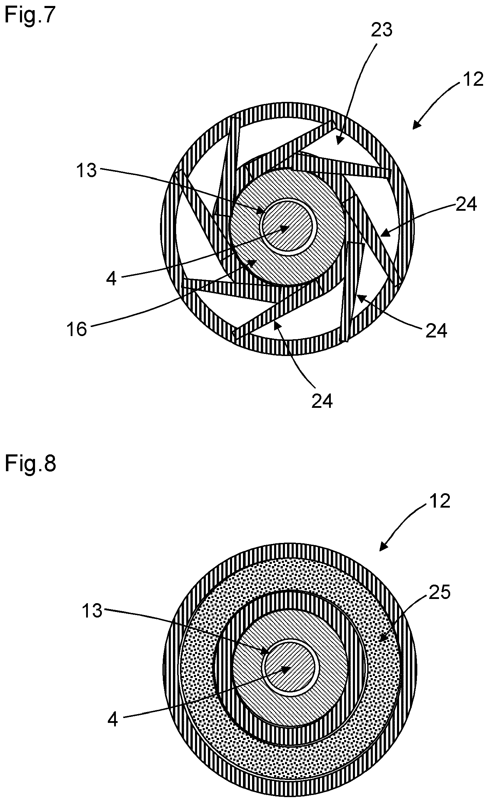

Gemäß Figur 7 ist die Federung 23 durch schräg zum Radius der Drehachse 4 angeordnete Stege 24 gebildet.

Damit können Stöße bzw. Belastungen aufgrund von Schwing-/Schockbelastungen ebenfalls weicher abgefangen werden und die mechanische Impulsbelastung auf das Stützlager 12 ist geringer.

Beispielsweise ist das Stützlager 12 durch mehrere Stege 24 gebildet, welche ein Kugellager umschließen, wodurch das Stützlager 12 gebildet ist. Das Kugellager 16 selbst ist über schräg zum Radius der Drehachse angeordnete Stege an dem Laserscannergehäuse befestigt. Damit erlaubt das Stützlager 12 bzw. Kugellager 16 eine radiale Bewegung der Stützwelle 13 in einem ersten radialen Bereich und eine radiale Bewegung der Stützwelle in einem zweiten radialen Bereich, der an den ersten radialen Bereich angrenzt, begrenzt.

Durch die Federung 23 der Stege 24 kann aber auch gleichzeitig eine axiale Bewegung der Stützwelle 13 gefedert und begrenzt werden.

Die Stege 24 sind vorzugsweise aus Kunststoff gebildet. Jedoch können die Stege auch aus Federmetall ausgebildet sein.

Je nach Material und Form der Stege 24 kann eine progressive Dämpfungskennlinie eingestellt werden.

Gemäß Figur 8 weist das Stützlager 12 in radialer Richtung eine Dämpfung 25 auf. Die Dämpfung 25 führt zu einem schnelleren Abklingen der Belastung bzw. der mechanischen Schwingungen bei einer Schwing-/Schockbelastung. Der Dämpfer absorbiert die Belastungsenergie, wodurch das Stützlager 12 entlastet wird. Beispielsweise ist der Dämpfer aus einem kompressiblen Schaumstoff gebildet.

Gemäß Figur 8 ist die Dämpfung 25 von einem Viskose-Schaumstoff gebildet, wobei die Elastizität des Viskose-Schaumstoff abhängig von der Krafteinwirkung ist, wobei die Elastizität nachlässt, je höher die Krafteinwirkung ist. Damit ist die Dämpfung 25 abhängig von der einwirkenden Kraft, wodurch ebenfalls das Stützlager 12 entlastet wird und eine mechanische Belastung auf die Stützwelle 13 verringert wird.

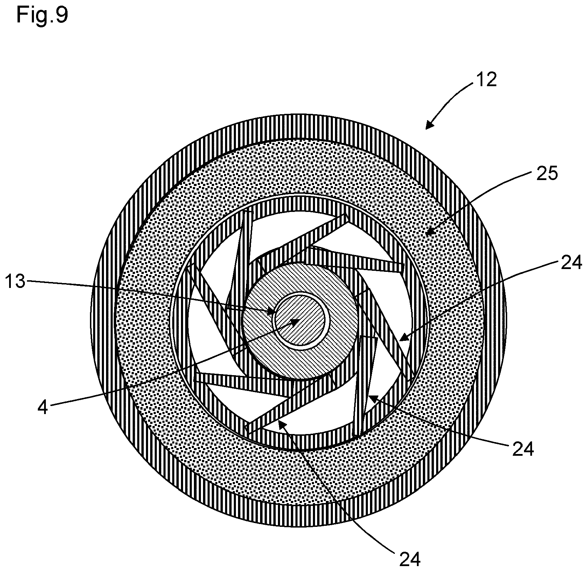

Gemäß Figur 9 ist analog zu Figur 7 die Federung durch schräg zum Radius der Drehachse angeordnete Stege 24 gebildet. Zusätzlich weist das Stützlager 12 in radialer Richtung eine Dämpfung 25 analog zu Figur 8 auf.

### Bezugszeichen:

1 Laserscanner
2 Objekte
3 Überwachungsbereich
4 Drehachse
5 drehbare Abtasteinheit
6 Abtastmodul
7 Auswerteeinheit
8 Lichtsender
9 Lichtempfänger
10 Motor
11 erstes Lager
12 Stützlager
13 Stützwelle
14 erster radialer Bereich
15 zweiter radialer Bereich
16 Kugellager
17 Gleitlager
18 erster axialer Bereich
19 zweiter axialer Bereich
20 dritter axialer Bereich
21 vierter axialer Bereich
22 Spitzlager
23 Federung
24 Stege
25 Dämpfung
26 Drehwelle

## Patentansprüche

1. Laserscanner (1), zur Erfassung von Objekten (2) in einem Überwachungsbereich (3), mit einer, um eine Drehachse (4) drehbare Abtasteinheit (5) mit mindestens einem Abtastmodul (6) zur Abtastung des Überwachungsbereichs (3) im Verlauf der Drehung der Abtasteinheit (5) um die Drehachse (4) und zum Erzeugen von entsprechenden Empfangssignalen sowie einer Auswerteeinheit (7) zur Gewinnung von Informationen über die Objekte (2) aus den Empfangssignalen, wobei das Abtastmodul (6) mindestens einen Lichtsender (8) zum Aussenden eines Lichtstrahls oder mehrerer voneinander separierten Lichtstrahlen und mindestens einem Lichtempfänger (9) zum Erzeugen der Empfangssignale aus den von Objekten (2) remittierten Lichtstrahlen umfasst, wobei eine Drehwelle (26) mit einem Motor (10) verbunden ist und die Drehwelle (26) in dem Motor (10) oder an dem Motor (10) in einem ersten Lager (11) gelagert ist, **dadurch gekennzeichnet, dass**
zu der Drehwelle (26) an dem zum Motor (10) gegenüberliegenden Ende der Abtasteinheit (5) eine Stützwelle (13) und ein Stützlager (12) angeordnet ist, wobei das Stützlager (12) eine radiale Bewegung der Stützwelle in einem ersten radialen Bereich (14) erlaubt und eine radiale Bewegung der Stützwelle in einem zweiten radialen Bereich (15), der an den ersten radialen Bereich (14) angrenzt, begrenzt.

2. Laserscanner (1) nach Anspruch 1, **dadurch gekennzeichnet, dass** das Stützlager (12) mindestens einen Anschlagkörper aufweist.

3. Laserscanner (1) nach Anspruch 1, **dadurch gekennzeichnet, dass** das Stützlager (12) mindestens ein Kugellager (16) aufweist.

4. Laserscanner (1) nach Anspruch 1, **dadurch gekennzeichnet, dass** das Stützlager (12) mindestens ein Gleitlager (17) aufweist.

5. Laserscanner (1) nach mindestens einem der vorhergehenden Ansprüche,
**dadurch gekennzeichnet, dass** das Stützlager (12) eine axiale Bewegung der Stützwelle (13) in einem ersten axialen Bereich (18) erlaubt und eine axiale Bewegung der Stützwelle (13) in einem zweiten axialen Bereich (19), der an den ersten axialen Bereich (18) angrenzt, begrenzt.

6. Laserscanner (1) nach Anspruch 5, **dadurch gekennzeichnet, dass** das Stützlager (12) eine axiale Bewegung der Stützwelle (13) in einem dritten axialen Bereich (20) erlaubt und eine axiale Bewegung der Stützwelle (13) in einem vierten axialen Bereich (21), der an den dritten axialen Bereich (20) angrenzt, begrenzt, wobei die mechanischen Belastungen in zwei oder beiden axialen Richtungen zur Drehachse (4) reduziert werden, bei einer Schwing/- Schockbelastung in axialer Richtung.

7. Laserscanner (1) nach mindestens einem der vorhergehenden Ansprüche 1 bis 4, **dadurch gekennzeichnet, dass** zusätzlich an dem Ende der Stützwelle (13) des Stützlagers (12) ein Spitzlager (22) angeordnet ist, wobei das Spitzlager (22) eine axiale Bewegung der Stützwelle (13) in einem ersten axialen Bereich (18) erlaubt und eine axiale Bewegung der Stützwelle (13) in einem zweiten axialen Bereich (19), der an den ersten axialen Bereich (18) angrenzt, begrenzt.

8. Laserscanner (1) nach mindestens einem der vorhergehenden Ansprüche,
**dadurch gekennzeichnet, dass** das Stützlager (12) eine Federung (23) in radialer Richtung aufweist.

9. Laserscanner (1) nach Anspruch 8, **dadurch gekennzeichnet, dass** die Federung (23) durch schräg zum Radius der Drehachse (4) angeordnete Stege (24) gebildet ist.

10. Laserscanner (1) nach mindestens einem der vorhergehenden Ansprüche,
**dadurch gekennzeichnet, dass** das Stützlager (12) in radialer Richtung eine Dämpfung (25) aufweist.

11. Laserscanner (1) nach Anspruch 10, **dadurch gekennzeichnet, dass** die Dämpfung (25) von einem Viskose-Schaumstoff gebildet ist, wobei die Elastizität des Viskose-Schaumstoffs abhängig von der Krafteinwirkung ist, wobei die Elastizität nachlässt, je höher die Krafteinwirkung ist.

## Claims

1. A laser scanner (1) for the detection of objects (2) in a monitored zone (3) having a scanning unit (5) rotatable about an axis of rotation (4) with at least one scanning module (6) for scanning the monitored zone (3) in the course of the rotation of the scanning unit (5) about the axis of rotation (4) and for generating corresponding received signals, and having an evaluation unit (7) for acquiring information on the objects (2) from the received signals, wherein the scanning module (6) comprises at least one light transmitter (8) for transmitting a light beam or a plurality of mutually separated light beams and at least one light receiver (9) for generating the received signals from the light beams remitted by objects (2), and wherein a rotatable axle (26) is connected to a motor (10) and the rotatable axle (26) is supported in a first bearing (11) in the motor (10) or at the motor (10),
**characterized in that**
a supporting shaft (13) and a supporting bearing (12) are arranged with respect to the rotatable axle (26) at the end of the scanning unit (5) disposed opposite the motor (10), with the supporting bearing (12) permitting a radial movement of the supporting shaft in a first radial region (14) and bounding a radial movement of the supporting shaft in a second radial region (15) that is adjacent to the first radial region (14).

2. A laser scanner (1) in accordance with claim 1, **characterized in that** the supporting bearing (12) has at least one abutment body.

3. A laser scanner (1) in accordance with claim 1, **characterized in that** the supporting bearing (12) has at least one ball bearing (16).

4. A laser scanner (1) in accordance with claim 1, **characterized in that** the supporting bearing (13) has at least one slide bearing (17).

5. A laser scanner (1) in accordance with at least one of the preceding claims, **characterized in that** the supporting bearing (12) permits an axial movement of the supporting shaft (13) in a first axial region (18) and bounds an axial movement of the supporting shaft (13) in a second axial region (19) that is adjacent to the first axial region (18).

6. A laser scanner (1) in accordance with claim 5, **characterized in that** the supporting bearing (12) permits an axial movement of the supporting shaft (13) in a third axial region (18) and bounds an axial movement of the supporting shaft (13) in a fourth axial region (21) that is adjacent to the third axial region (20), with the mechanical strains being reduced in two or both axial directions toward the axis of rotation (4), on a vibration or shock load in the axial direction.

7. A laser scanner (1) in accordance with at least one of the preceding claims 1 to 4, **characterized in that** a toe bearing (22) is additionally arranged at the end of the supporting shaft (13), with the toe bearing (22) permitting an axial movement of the supporting shaft (13) in a first axial region (18) and bounding an axial movement of the supporting shaft (13) in a second axial region (19) that is adjacent to the first axial region (18).

8. A laser scanner (1) in accordance with at least one of the preceding claims, **characterized in that** the supporting bearing (12) has a suspension (23) in the radial direction.

9. A laser scanner (1) in accordance with claim 8, **characterized in that** the suspension (23) is formed by webs (24) arranged obliquely to the radius of the axis of rotation (4).

10. A laser scanner (1) in accordance with at least one of the preceding claims **characterized in that** the supporting bearing (12) has damping (25) in the radial direction.

11. A laser scanner (1) in accordance with claim 10, **characterized in that** the damping (25) is formed by a viscose foam, with the elasticity of the viscose foam being dependent on the force effect, with the elasticity decreasing the higher the force effect is.

## Revendications

1. Scanner laser (1) pour détecter des objets (2) dans une zone à surveiller (3), comportant une unité de balayage (5) pouvant tourner autour d'un axe de rotation (4) et pourvue d'au moins un module de balayage (6) pour balayer la zone à surveiller (3) au cours de la rotation de l'unité de balayage (5) autour de l'axe de rotation (4) et pour générer des signaux de réception correspondants, ainsi qu'une unité d'évaluation (7) pour obtenir des informations sur les objets (2) à partir des signaux de réception, le module de balayage (6) comprenant au moins un émetteur de lumière (8) pour émettre un rayon lumineux ou plusieurs rayons lumineux séparés les uns des autres et au moins un récepteur de lumière (9) pour générer les signaux de réception à partir des rayons lumineux renvoyés par des objets (2), un arbre rotatif (26) étant relié à un moteur (10) et l'arbre rotatif (26) étant monté dans un premier palier (11) dans le moteur (10) ou sur le moteur (10),
**caractérisé en ce que**
un arbre de soutien (13) et un palier de soutien (12) sont disposés par rapport à l'arbre rotatif (26) à l'extrémité de l'unité de balayage (5) opposée au moteur (10), le palier de soutien (12) permettant un mouvement radial de l'arbre de soutien dans une première zone radiale (14) et limitant un mouvement radial de l'arbre de soutien dans une deuxième zone radiale (15) qui est adjacente à la première zone radiale (14).

2. Scanner laser (1) selon la revendication 1, **caractérisé en ce que** le palier de soutien (12) comporte au moins un corps de butée.

3. Scanner laser (1) selon la revendication 1, **caractérisé en ce que** le palier de soutien (12) comporte au moins un roulement à billes (16).

4. Scanner laser (1) selon la revendication 1, **caractérisé en ce que** le palier de soutien (12) comporte au moins un palier lisse (17).

5. Scanner laser (1) selon l'une au moins des revendications précédentes, **caractérisé en ce que** le palier de soutien (12) permet un mouvement axial de l'arbre de soutien (13) dans une première zone axiale (18) et limite un mouvement axial de l'arbre de soutien (13) dans une deuxième zone axiale (19) qui est adjacente à la première zone axiale (18).

6. Scanner laser (1) selon la revendication 5, **caractérisé en ce que** le palier de soutien (12) permet un mouvement axial de l'arbre de soutien (13) dans une troisième zone axiale (20) et limite un mouvement axial de l'arbre de soutien (13) dans une quatrième zone axiale (21) qui est adjacente à la troisième zone axiale (20), et en cas de contraintes par vibrations/chocs dans la direction axiale les contraintes mécaniques sont réduites dans deux directions axiales ou dans lesdites deux directions axiales par rapport à l'axe de rotation (4).

7. Scanner laser (1) selon l'une au moins des revendications précédentes 1 à 4, **caractérisé en ce qu'**en supplément, un palier en pointe (22) est disposé à l'extrémité de l'arbre de soutien (13) du palier de soutien (12), le palier en pointe (22) permettant un mouvement axial de l'arbre de soutien (13) dans une première zone axiale (18) et limitant un mouvement axial de l'arbre de soutien (13) dans une deuxième zone axiale (19) qui est adjacente à la première zone axiale (18).

8. Scanner laser (1) selon l'une au moins des revendications précédentes, **caractérisé en ce que** le palier de soutien (12) comporte une suspension (23) dans la direction radiale.

9. Scanner laser (1) selon la revendication 8, **caractérisé en ce que** la suspension (23) est formée par des entretoises (24) disposées en oblique par rapport au rayon de l'axe de rotation (4).

10. Scanner laser (1) selon l'une au moins des revendications précédentes, **caractérisé en ce que** le palier de soutien (12) présente un amortissement (25) dans la direction radiale.

11. Scanner laser (1) selon la revendication 10, **caractérisé en ce que** l'amortissement (25) est formé par une mousse de viscose, l'élasticité de la mousse de viscose dépendant de l'effet de la force, l'élasticité diminuant à mesure que l'effet de la force augmente.
